# EUROPÄISCHE PATENTSCHRIFT

(11) **EP 0 993 593 B1**
(45) Veröffentlichungstag und Bekanntmachung des Hinweises auf die Patenterteilung: **01.05.2013**
(21) Anmeldenummer: 99914465.2
(22) Anmeldetag: 02.03.1999
(51) Int. Cl.: G01F 23/00, G01F 23/292, G01F 23/296

(54) **VORRICHTUNG ZUR INHALTSKONTROLLE EINES BEHÄLTERS**
DEVICE FOR REGULATING THE CONTENTS OF A CONTAINER
DISPOSITIF PERMETTANT DE CONTROLER LE CONTENU D'UN CONTENANT

(30) Priorität: 06.03.1998 DE 19809620
(43) Veröffentlichungstag der Anmeldung: 19.04.2000
(73) Patentinhaber: Lincoln GmbH, 69190 Walldorf (DE)
(72) Erfinder: STEIGER, Peter, D-69198 Schriesheim (DE)
(74) Vertreter: KEIL & SCHAAFHAUSEN Patentanwälte
(86) Internationale Anmeldenummer: PCT/EP1999/001349
(87) Internationale Veröffentlichungsnummer: WO 1999/045345

(56) Entgegenhaltungen:
- DE-A- 4 433 170
- US-A- 3 212 672
- US-A- 5 694 974

## Beschreibung

Die Erfindung bezieht sich auf eine Vorrichtung zur Inhaltskontrolle eines Behälters auf einen nicht selbstnivellierenden vorratsstoff, wie Schmierstoff, Fett oder dergleichen, mit einem um eine Drehachse bewegbaren Rührflügel für die Zuführung des Vorratsstoffes zu einem Verbraucher, z.B. dem Ansaugraum einer Schmierpumpe und zum Befreien des Vorratsstoffes von Lufteinschlüssen, ggf. mit einem zugehörigen Abstreifer für den Vorratsstoff von der Behälterwand, mit Mitteln zum Abstreifen des Vorratsstoffes von dem Rührflügel und mit einer Meßeinrichtung für den Füllstand des Vorratsstoffes in dem Behälter.

Bei der Inhaltskontrolle, insbesondere der Leerstandsüberwachung, von Behältern auf hochviskose Vorratsstoffe, wie Schmiermittel, Fett oder dergleichen, wie sie zum Beispiel bei Zentralschmierpumpen als Verbraucher eingesetzt werden, resultieren aus der hohen Steifigkeit des vorratsstoffes Probleme, da dieser sich nicht mehr selbstnivellierend verhält. Dies gilt unter anderem insbesondere für Fette ab der Klasse 2 der Konsistenzeinteilung des National Lubricating Grease Institut (NLGI) bzw. der DIN 51 818. Bei einem Vorrat dieser Stoffe kann daher nicht ohne weiteres davon ausgegangen werden, daß eine ebene Oberfläche vorliegt, welche der Füllstandsmessung dienen könnte.

Zum Stoffmanagement wird üblicherweise ein rotierender Rührflügel eingesetzt, der den Vorratsstoff von Lufteinschlüssen befreit und dem Ansaugraum des Verbrauchers zuführt. Dabei entstehen auf der Oberfläche des Vorratsstoffs berg- und talartige Strukturen, da der Rührflügel bei seiner Drehbewegung immer Vorratsstoff vor sich herschiebt. Die Bildung berg- und talartiger Strukturen wird durch Maßnahmen zum Abstreifen des Vorratsstoffs von dem sich drehenden Rührflügel unter Umständen noch verstärkt. Ähnliches gilt für einen rotierenden Abstreifer für den Vorratsstoff von der Behälterwand. Deswegen Ist der Einsatz an sich bekannter Meßeinrichtungen, welche auf dem Reflexionsprinzip beruhen, nicht möglich. Eine Lösung dieses Problems durch eine Folgeplatte, die auf der Oberfläche des Vorrats angeordnet ist und diese nivellieren soll, hat den Nachteil, daß dabei ein Teil des Nutzinhalts verlorengeht. Darüber hinaus sind bei einer solchen Niveauglättung der konstruktive Aufwand und die dabei entstehenden Kosten relativ hoch.

Aus der DE 44 33 170 A1 ist eine Einrichtung zur Leerstandsüberwachung eines Schmierstoff-Vorratsbehälters bekannt, die einen Rührflügel mit einem daran schwenkbar angelenkten Halter für einen Lagegeber aufweist. Das Überwachungsprinzip dieser Einrichtung besteht darin, daß mittels eines Lagesensors die Lage des Lagegebers abgetastet wird, welche davon abhängt, ob noch Vorratsstoff in dem Behälter vorhanden ist oder nicht. Bei dieser bekannten Vorrichtung besteht daher eine direkte mechanische Wechselwirkung zwischen dem Lagegeber und dem Vorratsstoff.

Aus der Druckschrift US 5,694,974 ist ein Füllstands-Detektionssystem für Farbe in einer Druckmaschine bekannt, das eine mit Farbe gefüllte Kammer aufweist, In der sich eine Welle dreht. An der Welle ist ein langgestreckter erster und zweiter, jeweils flexibler Flügel befestigt, welche bei Drehung der Welle relativ zur Gefäßwandung rotieren. Ferner ist zu jedem Flügel jeweils ein Abstandssensor vorgesehen, mit welchem das äußere Ende des jeweiligen, sich drehenden Flügels an einem Punkt der Bewegungsbahn detektiert werden kann. Der erste und der zweite Flügel biegen sich bei Anwesenheit von Farbe, so daß das äußere Ende des jeweiligen Flügels einen Abstand von dem jeweiligen Abstandssensor hat, bei dem dieser den jeweiligen Flügel nicht detektieren kann. Bei Abwesenheit von Farbe bleibt der jeweilige Flügel gerade, so daß das äußere Ende des jeweiligen Flügels einen geringeren Abstand von dem jeweiligen Abstandssensor aufweist, bei dem dieser den Flügel detektiert. Ferner ist ein Abstreifer vorgesehen, der sich bis in die Nähe der Kammerwandung erstreckt und Farbe von dieser entfernt.

Die Aufgabe der vorliegenden Erfindung ist die Schaffung einer verbesserten Vorrichtung der eingangs genannten Art, mit der eine Inhaltskontrolle mit Meßeinrichtungen möglich ist, welche eine glatte Oberfläche voraussetzen, wie dies bei selbstnivellierenden Vorratsstoffen der Fall ist.

Diese Aufgabe wird erfindungsgemäß durch die Merkmale des Anspruchs 1 gelöst.

Danach ist bei einer gattungsgemäßen Vorrichtung vorgesehen, daß im Bereich des Behälterbodens mit Öffnungen für das Überführen des Vorratsstoffes in Richtung des Verbrauchers wenigstens ein wenigstens bereichsweise radialer Stehflügel angeordnet ist, welcher wenigstens im Bereich der Behältermitte einen Abstand von dem Behälterboden aufweist, und daß der Rührflügel zumindest teilweise, d. h. über einen Teil seiner Länge, unter dem Stehflügel hindurchdrehbar ist.

Die Anordnung von Stehflügel, Rührflügel und Abstreifer ermöglicht eine Glättung der Vorratsstoffoberfläche, so daß eine zuverlässige Messung des Niveaus der Oberfläche des Vorratsstoffs in dem Behälter erfolgen kann, auch wenn der Vorratsstoff eine hohe Steifigkeit aufweist und nicht selbstnivellierend ist. Der Aufbau von berg- und talartigen Struktur auf der Oberfläche des Vorratsstoffs wird nämlich verhindert.

Die Meßeinrichtung weist eine Signalgeber/sensor-Kombination, z.B. für Schall oder Lichtsignale, insbesondere im oberen Behälterbereich in der Mitte des Behälters, auf, wobei vorzugsweise eine zur Drehachse des Rührflügels symmetrische Signalemission erfolgt. Hiermit werden Fehlreflexionen, die insbesondere durch den Abstreifer des Rührflügels hervorgerufen werden könnten, vermieden oder zumindest vermindert, ebenso Fehlfunktionen, die aufgrund einer Trichterbildung in der Behältermitte beim Entleeren eines vollen Behälters durch fehlende Reflektionen auftreten könnten. Auch werden hiermit Fehlfunktionen aufgrund einer beim Füllen des Behälters von unten auftretenden Niveauerhöhung in der Behältermitte vermieden.

wenn die Signalgeber/sensor-Kombination an einem ggf. eine Signalöffnung aufweisenden, vorzugsweise lösbaren Behälterdekkel angebracht ist, ist eine besonders einfache Montage der Signalgeber/sensor-Kombination bei leichter Zugänglichkeit des Behälterinneren gewährleistet.

Um die Verschmutzungsgefahr der Signalgeber/sensor-Kombination zu verringern, ist sie in einer Vertiefung der Meßeinrichtung zurückgesetzt angeordnet, wobei die Vertiefung mit der Signalöffnung fluchtet.

Ein besonders einfacher und funktionssicherer Aufbau der erfindungsgemäßen Vorrichtung wird erreicht, wenn die Drehachse des Rührflügels parallel, vorzugsweise koaxial zur Mittelachse des Behälters angeordnet ist.

Bei einer erfindungsgemäßen Vorrichtung mit einem besonders einfachen Aufbau weist der Stehflügel einen in einem peripheren Bereich im Behälter angebrachten Befestigungsteil sowie einen sich zungenartig in Richtung der Behältermitte erstreckenden Widerstandsteil auf, welche Teile an die Form des Rührflügels angepaßt sind.

Bei einer weiteren bevorzugten Ausführungsform ist der jeweilige radiale Stehflügel als Rechteckprofil mit zum Behälterboden paralleler Oberkante und Unterkante ausgebildet, wodurch eine besondere Wirksamkeit als Abstreifer erreicht wird.

Eine sichere und einfache Befestigung des jeweiligen Stehflügels in dem Behälter wird dadurch erreicht, daß der Befestigungsteil an dem Behälterboden und/oder an der Behälterwand lösbar, oder nicht-lösbar angebracht ist.

Eine weiter verbesserte Glättung der Vorratsstoffoberfläche wird mittels zweier oder mehrerer symmetrisch zur Drehachse des Rührflügels angeordneter Stehflügel erreicht; bei zwei Stehflügeln sind diese vorzugsweise um 180° zueinander versetzt.

Eine noch weitere Verbesserung der Glättung der Vorratsstoffoberfläche wird dadurch erreicht, daß der Abstreifer an die jeweiligen Stehflügel und ggf. die Behälterwand angepaßte vertikale und horizontale Bügelabschnitte aufweist.

Eine erhöhte Funktionssicherheit wird ferner dadurch erreicht, daß die Meßeinrichtung ein Steuerungs- und Auswertemodul aufweist, mit welchem eine zeitliche Mittelwertbildung über eine Anzahl von Einzelmessungen erfolgen kann. Bei einem solchen Betrieb der Vorrichtung wird insbesondere der Einfluß von Fehlmessungen aufgrund einer nicht vollständig planen Vorratsstoffoberfläche auf die Messung des Füllstandes korrigiert.

Um zu verhindern, daß das Ausgangssignal um den Schaltpunkt ein- und ausschaltet, weisen die Signalsensoren eine Schalthysterese auf.

Um eine möglichst plane Vorratsstoffoberfläche auch beim Befüllen und Entleeren des Behälters zu erreichen, sind Öffnungen zum Befüllen und Entleeren im Behälterboden vorgesehen.

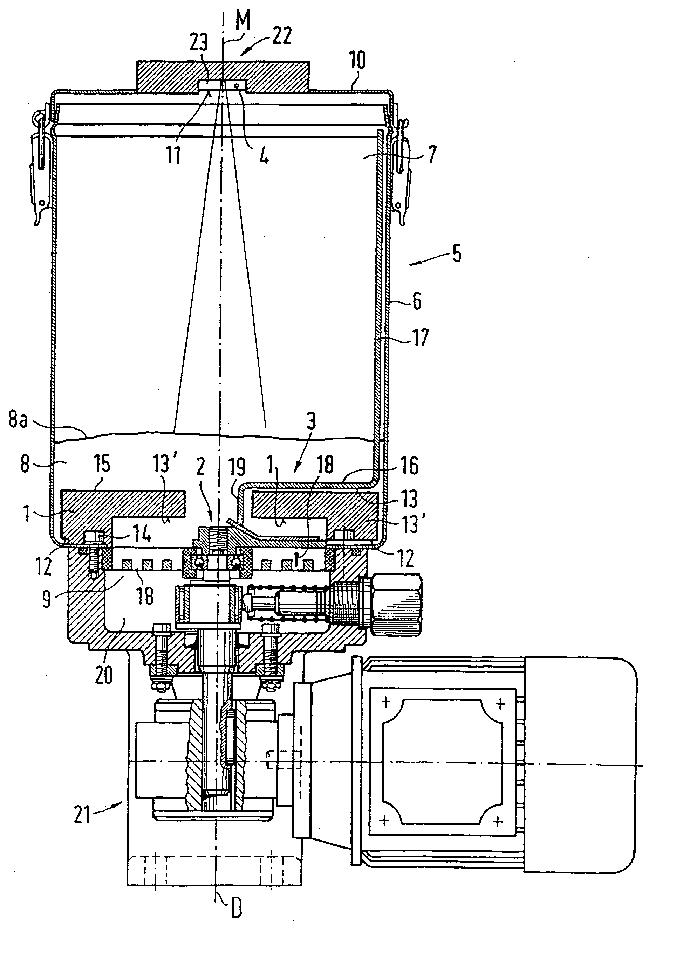

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenhang in einzelnen Ansprüchen oder deren Rückbeziehung.

Die einzige Figur zeigt eine erfindungsgemäße Vorrichtung mit beispielhaft zwei radialen Stehflügeln 1 und einem paddelartigen Rührflügel 2 mit einem zugehörigen Abstreifer 3 in einem Behälter 5 für einen vorratsstoff 8, wie Schmierstoff, Fett oder dergleichen. Der Behälter 5 kann, wie dargestellt, Bestandteil einer Schmiermittelpumpe bzw. einer solchen als Verbraucher 21 zugeordnet sein und über Öffnungen 18 im Bereich des Behälterbodens 9 in deren Ansaugraum 20 münden. Die symmetrisch zu der mit der Mittelachse M des Behälters 5 zusammenfallenden Drehachse D des von der Mittelachse M aus radial nach außen ragenden Rührflügels 2 um 180° versetzt angeordneten Stehflügel 1 sind nahe oberhalb des Behälterbodens 9 angeordnet, enden im Abstand vor der Mittelachse M und weisen zumindest im Bereich benachbart der Mittelachse M einen vorgegebenen Abstand vom Behälterboden 9 auf. Der Rührflügel 2 erstreckt sich zumindest teilweise unter die Stehflügel 1 in einem vorgegebenen Abstand vom Behälterboden 9. Ein mit dem Rührflügel 2 drehbarer Abstreifer 3 erstreckt sich mit einem vertikalen Bügelabschnitt 19 zwischen den Stehflügeln 1 hindurch, mit einem horizontalen Bügelabschnitt 16 parallel zu dem Behälterboden 9 und der Oberkante 13 jedes Stehflügels 1 und mit einer dem anschließenden weiteren Bügelabschnitt 17 parallel zu der vertikalen Behälterwand 6 bis etwa zum oberen Ende des Behälters 5. Mit Hilfe der Bügelabschnitte 16, 17 und 19 wird an den Stehflügeln 1 und der Behälterwand 6 haftender vorratsstoff 8 abgestreift. Beim Drehen des Rührflügels 2 um die zu der Mittelachse M koaxiale Drehachse D wird ferner der Vorratsstoff 8 von Lufteinschlüssen befreit und über die um die Drehachse D angeordnete Öffnungen 18 dem unter dem Behälterboden 9 liegenden Ansaugraum 20 oder dergleichen zugeführt.

Der Rührflügel 2 schiebt bei seiner Bewegung Vorratsstoff 8 vor sich her, demgegenüber die Stehflügel 1 als Hindernis wirken. An den Stehflügeln 1 aufgestauter Vorratsstoff 8 wird mittels des Abstreifers 3 abgestreift und damit die Verteilung des Vorratsstoffs 8 im Behälter 5 vergleichmäßigt. Dies wird insbesondere dadurch erleichtert, daß die Drehachse D des Rührflügels 2 parallel und vorzugsweise koaxial zur Mittelachse M des Behälters 5 angeordnet ist, so daß eine Nivellierung der Vorratsstoffoberfläche 8a erfolgt.

Der Stehflügel 1 gemäß der Figur besteht aus einem im peripheren Bereich 12 im Behälter 5 angebrachten Befestigungsstück 14 und einem sich zungenartig in Richtung der Behältermitte erstreckenden Widerstandsteil 15, die beide rheologisch an den Rührflügel 2 angepaßt sind, um einen optimalen Widerstand für den vom Rührflügel 2 bewegten Vorratsstoff 8 zu bilden. In der dargestellten Ausführungsform ist der Befestigungsteil 14 am Behälterboden 9 lösbar oder nicht-lösbar angebracht. Der Befestigungsteil 14 kann jedoch ebenso an der vertikalen Behälterwand 6 lösbar oder nicht-lösbar angebracht sein. Der jeweilige Stehflügel 1 ist als Rechteckprofil mit horizontaler Oberkante 13 und horizontaler Unterkante 13' ausgebildet, wobei der Rührflügel 2 in der mittleren Aussparung unter dem Stehflügel 1 rotieren kann.

Der vertikale Bügelabschnitt 16 des Abstreifer 3 ist vorzugsweise versetzt und parallel zu der Drehachse D am Rührflügel 2 angeordnet, so daß nur ein geringer vorgegebener Abstand zum Stehflügel 1, insbesondere zum Widerstandsteil 15, vorliegt. Der horizontale Bügelabschnitt 17 des Abstreifers 3 erstreckt sich nahe oberhalb der Oberkante 13 der Stehflügel 1. Um eine verbesserte Glättung der Vorratsstoffoberfläche 8a zu erreichen, ist der Abstreifer 3 also axial versetzt zum paddelartigen Rührflügel 2 angeordnet.

Das Zusammenwirken von Rührflügel 2 mit Stehflügeln 1 und Abstreifer 3 führt bei einer Drehbewegung des Rührflügels 2 zu einer Glättung der Oberfläche 8a des Vorratsstoffs 8. Eine Messung des Niveaus der Vorratsstoffoberfläche 8a kann so mittels einer eine Signalgeber/sensor-Kombination 4, z.B. für Schall- oder Lichtsignale, aufweisende, auf dem mit Signalöffnung 11 versehenen Behälterdeckel 10 angeordnete Meßeinrichtung 22 nach dem Reflexionsprinzip erfolgen, das z.B. bei Echoloten und dergleichen eingesetzt wird. Danach kann das Niveau der Vorratsstoffoberfläche 8a im Behälter 5 relativ zu der Signalgeber/sensor-Kombination 4, z.B. durch Echolaufzeitmessung mittels Ultraschall bestimmt werden. Bei einer Anordnung der Signalgeber/sensor-Kombination 4 im oberen Behälterbereich 7 in der Mitte des Behälters 5 und einer zu der Behälterachse M und der Drehachse D symmetrischen Signalemission ist ein störender Einfluß des Abstreifers 3 auf die Reflexion der Signale gering. Dabei ist, um einer verschmutzungsgefahr entgegenzuwirken, die Signalgeber/sensor-Kombination 4 in einer Vertiefung 23 der Meßeinrichtung 22 zurückgesetzt angeordnet.

Mit diesen Maßnahmen lassen sich Störungen durch Abweichungen von einer planen Vorratsstoffoberfläche 8a verringern, die beim Entleeren oder Befüllen des Behälters 5 mit Vorratsstoff 8 auftreten können. Beim Entleeren kann eine trichterartige Vertiefung und beim Befüllen eine partielle Erhöhung der Vorratsstoffoberfläche 8a auftreten. In beiden Fällen können temporäre Fehlreflexionen und entsprechende Störungen in der Messung des Füllniveaus auftreten, die jedoch durch die genannten Maßnahmen vermieden werden.

Die Meßeinrichtung 22 kann zur weiteren Korrektur von Fehlreflexionen ein Steuerungs- und Auswertungsmodul aufweisen, mittels dessen eine zeitliche Mittelwertbildung über eine Anzahl von Einzelmessungen erfolgen kann. Bei einer Teilmenge von Einzelmessungen können dabei Fehlreflexionen toleriert werden, ohne daß die Genauigkeit der Gesamtmessung übermäßig reduziert oder unnötige Fehlermeldungen ausgelöst werden. Darüber hinaus ist zur Optimierung des Ansprechverhaltens der Signalgeber/sensor-Kombination 4 und um zu verhindern, daß das Sensorsignal um den Schaltpunkt ein- und ausschaltet, für diese eine Schalthysterese vorgesehen.

### Bezugszeichenliste

- 1: Stehflügel
- 2: Rührflügel
- 3: Abstreifer
- 4: Signalgeber/sensor-Kombination
- 5: Behälter
- 6: Behälterwand
- 7: oberer Behälterbereich
- 8: Vorratsstoff
- 8a: Vorratsstoffoberfläche
- 9: Behälterboden
- 10: Behälterdeckel
- 11: Signalöffnung
- 12: peripherer Behälterbereich
- 13: Stehflügeloberkante
- 13': Stehflügelunterkante
- 14: Befestigungsteil
- 15: Widerstandsteil
- 16: erster Bügelabschnitt
- 17: weiterer Bügelabschnitt
- 18: Öffnungen
- 19: dritter Bügelabschnitt
- 20: Ansaugraum
- 21: Verbraucher, Schmierpumpe
- 22: Meßeinrichtung
- 23: vertiefung

- D: Drehachse
- M: Mittelachse

## Patentansprüche

1. Vorrichtung zur Inhaltskontrolle eines Behälters (5) auf einen nicht selbstnivellierenden Vorratsstoff (8), wie Schmierstoff, Fett oder dergleichen, mit einem um eine Drehachse (D) bewegbaren Rührflügel (2) für die Zuführung des Vorratsstoffes (8) zu einem Verbraucher (21), z.B. dem Ansaugraum (20) einer Schmierpumpe, und zum Befreien des Vorratsstoffes (8) von Lufteinschlüssen, ggf. mit einem zugehörigen Abstreifer (3) für den Vorratsstoff (8) von der Behälterwand (6), mit Mitteln zum Abstreifen des Vorratsstoffes (8) von dem Rührflügel (2) und mit einer Messeinrichtung (22) für den Füllstand des Vorratsstoffes (8) in dem Behälter (5), wobei im Bereich des Behälterbodens (9) mit Öffnungen (18) für das Überführen des Vorratsstoffes (8) in Richtung des Verbrauchers (21) wenigstens ein wenigstens bereichsweise radialer Stehflügel (1) angeordnet ist, welcher wenigstens im Bereich der Behältermitte einen Abstand von dem Behälterboden (9) aufweist, wobei der Rührflügel (2) zumindest teilweise unter dem Stehflügel (1) hindurchdrehbar ist und wobei die Messeinrichtung (22) eine Signalgeber/sensor-Kombination (4), z.B. für Schall- oder Lichtsignale, zum Messen des Niveaus der Vorratsstoffoberfläche (8a) nach dem Reflexionsprinzip aufweist.

2. Vorrichtung nach Anspruch 1, **dadurch gekennzeichnet, dass** der Rührflügel (2) einen bügelförmigen Abstreifer (3) aufweist, welcher einen unmittelbar oberhalb des wenigstens einen Stehflügels (1) umlaufenden ersten Bügelabschnitt (16) und ggf. einen sich daran anschließenden, sich dicht an der Behälterwand (6) vorbei bewegenden weiteren Bügelabschnitt (17) hat.

3. Vorrichtung nach Anspruch 1, **dadurch gekennzeichnet, dass** die Signalgeber/sensor-Kombination (4) im oberen Behälterbereich (7) in der Behältermitte angeordnet ist und vorzugsweise eine zur Drehachse (D) symmetrische Signalemission vorsieht.

4. Vorrichtung nach Anspruch 1 oder 3, **dadurch gekennzeichnet, dass** die Signalgeber/sensor-Kombination (4) an einem z.B. eine Signalöffnung (11) aufweisenden, vorzugsweise lösbaren Behälterdeckel (10) angebracht ist.

5. Vorrichtung nach einem der vorhergehenden Ansprüche, **dadurch gekennzeichnet, dass** die Signalgeber/sensor-Kombination (4) in einer Vertiefung (23) der Messeinrichtung (22) zurückgesetzt angeordnet ist.

6. Vorrichtung nach einem der vorherigen Ansprüche, **dadurch gekennzeichnet, dass** die Drehachse (D) des Rührflügels (2) parallel, vorzugsweise koaxial zur Mittelachse (M) des vorzugsweise zylindrischen Behälters (5) angeordnet ist.

7. Vorrichtung nach einem der vorherigen Ansprüche, **dadurch gekennzeichnet, dass** der jeweilige Stehflügel (1) einen in einem peripheren Bereich (12) vorgesehenen Befestigungsteil (14) und einen sich zungenartig in Richtung der Behältermitte erstreckenden Widerstandsteil (15) aufweist.

8. Vorrichtung nach Anspruch 7, **dadurch gekennzeichnet, dass** der Befestigungsteil (14) an dem Behälterboden (9) und/oder der Behälterwand (6) angebracht ist.

9. Vorrichtung nach einem der vorhergehenden Ansprüche, **dadurch gekennzeichnet, dass** der wenigstens eine Stehflügel (1) als Rechteckprofil mit zum Behälterboden (9) paralleler Oberkante (13) und Unterkante (13') ausgebildet ist.

10. Vorrichtung nach einem der vorhergehenden Ansprüche, **dadurch gekennzeichnet, dass** mindestens zwei symmetrisch zur Drehachse (D) des Rührflügels (2) um 180° versetzt angeordnete Stehflügel (1) vorgesehen sind.

11. Vorrichtung nach einem der vorhergehenden Ansprüche, **dadurch gekennzeichnet, dass** der erste Bügelabschnitt (16) parallel zur vorzugsweise horizontalen Oberkante (13) des wenigstens einen Stehflügels (1) umläuft.

12. Vorrichtung nach einem der vorhergehenden Ansprüche, **dadurch gekennzeichnet, dass** der weitere Bügelabschnitt (18) parallel zur vorzugsweise vertikalen Behälterwand (6) umläuft.

13. Vorrichtung nach einem der vorhergehenden Ansprüche, **dadurch gekennzeichnet, dass** der Abstreifer (3) einen dritten vertikalen Bügelabschnitt (19) aufweist, der versetzt und vorzugsweise parallel zur Drehachse (D) am Rührflügel (2) angebracht ist und einen geringen radialen Abstand zu dem inneren Ende des jeweiligen Stehflügels (1), insbesondere zu dessen Widerstandsteil (15), aufweist.

14. Vorrichtung nach einem der Ansprüche 1 und 3 bis 12, **dadurch gekennzeichnet, dass** die Signalgeber/sensor-Kombination (4) eine Schalthysterese aufweist.

15. Vorrichtung nach einem der vorherigen Ansprüche, **dadurch gekennzeichnet, dass** die Messeinrichtung (22) ein Steuerungs- und Auswertungsmodul aufweist, mittels dessen eine zeitliche Mittelwertbildung für eine Anzahl von Einzelmessungen ausführbar ist.

## Claims

1. A device for monitoring the contents of a container (5) in respect of a non-self-levelling stock material (8), such as lubricant, grease or the like, said device comprising a stirrer blade (2), movable about an axis of rotation (D), for supplying the stock material (8) to a consumer (21), e.g. to the suction chamber (20) of a lubricating-oil pump, and for eliminating pockets of air from the stock material (8), said device including where appropriate an associated scraper (3) for scraping the stock material (8) from the wall (6) of the container, means for scraping the stock material (8) from the stirrer blade (2), and a device (22) for measuring the level of the stock material (8) in the container (5), in which case, in the region of the floor (9) of the container with its openings (18) for conveying the stock material (8) in direction of the consumer (21), there is at least one stationary wing (1), which extends at least partly in radial direction and, at least in the region of the middle of the container, is disposed at a distance from the container floor (9), the stirrer blade (2) being capable of rotating underneath at least part of said stationary wing (1), and the measuring device (22) comprises a signal transmitter/sensor combination (4), e.g. for sound or light signals, for measuring the level of the surface (8a) of the stock material according to the reflection principle.

2. A device according to Claim 1, **characterized in that** the stirrer blade (2) has a strap-like scraper (3) comprising a first strap-like portion (16) extending directly above the at least one stationary wing (1) and, if appropriate, another strap-like portion (17) connected to this and running closely alongside the container wall (6).

3. A device according to Claim 1, **characterized in that** the signal transmitter/sensor combination (4) is located in the middle of the upper region (7) of the container and preferably provides for a signal emission which is symmetrical to the axis of rotation (D).

4. A device according to Claim 1 or 3, **characterized in that** the signal transmitter/sensor combination (4) is mounted on a container lid (10), which, for example, has a signal opening (11) and is preferably removable.

5. A device according to one of the preceding claims, **characterized in that** the signal transmitter/sensor combination (4) is set back in a recess (23) of the measuring device (22).

6. A device according to one of the preceding claims, **characterized in that** the axis of rotation (D) of the stirrer blade (2) is parallel to, and preferably coaxial with, the centre axis (M) of the preferably cylindrical container (5).

7. A device according to one of the preceding claims, **characterized in that** each stationary wing (1) has a fastening component (14) provided in a peripheral region (12) and a resistance component (15) extending in the manner of a tongue towards the middle of the container.

8. A device according to Claim 7, **characterized in that** the fastening component (14) is fixed to the floor (9) of the container and/or to the wall (6) of the container.

9. A device according to one of the preceding claims, **characterized in that** the at least one stationary wing (1) is formed as a rectangular profile with upper edge (13) and lower edge (13') extending parallel to the floor (9) of the container.

10. A device according to one of the preceding claims, **characterized in that** at least two stationary wings (1) are provided, which are symmetrical relative to the axis of rotation (D) of the stirrer blade (2) and are offset relative to one another by 180°.

11. A device according to one of the preceding claims, **characterized in that** the first strap portion (16) runs parallel to the preferably horizontal upper edge (13) of the at least one stationary wing (1).

12. A device according to one of the preceding claims, **characterized in that** the additional strap portion (17) runs parallel to the preferably vertical container wall (6).

13. A device according to one of the preceding claims, **characterized in that** the scraper (3) has a third vertical strap portion (19) which is mounted on the stirrer blade so as to be offset relative to the axis of rotation (D), preferably extending parallel to it and at a slight distance in radial direction from the inner end of the respective stationary wing (1), in particular from its resistance component (15).

14. A device according to one of Claims 1 and 3 to 12, **characterized in that** the signal transmitter/sensor combination (4) has a switching hysteresis.

15. A device according to one of the preceding claims, **characterized in that** the measuring device (22) has a control and evaluation module, by means of which a time-averaged value for a series of discrete measurements can be obtained.

## Revendications

1. Dispositif permettant de contrôler le contenu d'un contenant (5) concernant un matériau en réserve (8) non autonivellant, comme du lubrifiant, de la graisse ou un matériau analogue, avec une pale d'agitation (2) mobile autour d'un axe de rotation (D) pour l'alimentation du matériau en réserve (8) vers un consommateur (21), par ex. : le compartiment d'aspiration (20) d'une pompe de lubrification et pour libérer le matériau en réserve (8) d'inclusions d'air, le cas échéant avec un racleur (3) en faisant partie pour libérer le matériau en réserve (8) de la paroi du contenant (6), avec des moyens pour racler le matériau en réserve (8) de la pale d'agitation (2) et avec un système de mesure (22) pour le niveau du matériau en réserve (8) dans le contenant (5), au moins une pale fixe (1) radiale au moins en matière de zone étant disposée dans à zone du fond du contenant (9) avec des ouvertures (18) pour le transfert du matériau en réserve (8) dans à direction du consommateur (21), qui présente au moins dans la zone du centre du contenant un intervalle du fond du contenant (9), la pale d'agitation (2) étant au moins partiellement pivotable à travers sous la pale fixe (1) et le système de mesure (22) présentant une combinaison émetteur /capteur de signaux (4), par ex. : pour des signaux sonores ou lumineux, pour mesurer le niveau de la surface de matériau en réserve (8a) selon le principe de réflexion.

2. Dispositif selon la revendication 1 **caractérisé en ce que** la pale d'agitation (2) présente un racleur (3) en forme d'étrier qui possède une première section en étrier (16) tournant directement au-dessus d'au moins une pale fixe (1) et le cas échéant une autre section en étrier (17) s'y raccordant, passant tout près de la paroi du contenant (6).

3. Dispositif selon la revendication 1 **caractérisé en ce que** la combinaison émetteur/capteur de signaux (4) est disposée dans la zone de contenant (7) supérieure au centre du contenant et prévoit de préférence une émission de signaux symétrique à l'axe de rotation (D).

4. Dispositif selon la revendication 1 ou 3 **caractérisé en ce que** la combinaison émetteur/capteur de signaux (4) est placée sur un couvercle du contenant (10) de préférence amovible, présentant par ex. : une ouverture de signaux (11).

5. Dispositif selon une quelconque des revendications précédentes **caractérisé en ce que** la combinaison émetteur/capteur de signaux (4) est placée en retrait dans une cavité (23) du système de mesure (22).

6. Dispositif selon une quelconque des revendications précédentes **caractérisé en ce que** l'axe de rotation (D) de la pale d'agitation (2) est placé parallèle, de préférence coaxialement à l'axe central (M) du contenant (5) de préférence cylindrique.

7. Dispositif selon une quelconque des revendications précédentes **caractérisé en ce que** la pale fixe (1) respective présente une pièce de fixation (14) prévue dans une zone (12) périphérique et une pièce de résistance (15) s'étendant comme une languette dans la direction du centre du contenant.

8. Dispositif selon la revendication 7 **caractérisé en ce que** la pièce de fixation (14) est montée sur le fond du contenant (9) et/ou sur la paroi du contenant (6).

9. Dispositif selon une quelconque des revendications précédentes **caractérisé en ce qu'**au moins un pale fixe (1) est formée comme un profilé rectangulaire avec un bord supérieur (13) et un bord inférieur (13') parallèles au fond du contenant (9).

10. Dispositif selon une quelconque des revendications précédentes **caractérisé en ce qu'**au moins deux pales fixes (1) sont prévues disposées symétriquement à l'axe de rotation (D) de la pale d'agitation (2) et décalées de 180°.

11. Dispositif selon une quelconque des revendications précédentes **caractérisé en ce que** la première section en étrier (16) passe parallèlement au bord supérieur (13) de préférence horizontal d'au moins la pale fixe (1).

12. Dispositif selon une quelconque des revendications précédentes **caractérisé en ce que** l'autre section en étrier (18) passe parallèlement à la paroi de contenant (6) de préférence verticale.

13. Dispositif selon une quelconque des revendications précédentes **caractérisé en ce que** le racleur (3) présente une troisième section en étrier (19) verticale qui est disposée déportée et de préférence parallèle à l'axe de rotation (D) sur la pale d'agitation (2) et présente un écart radial faible par rapport à l'extrémité interne de la pale fixe (1) correspondante, en particulier à sa pièce de résistance (15).

14. Dispositif selon une quelconque des revendications 1 et 3 à 12 **caractérisé en ce que** la combinaison émetteur/capteur de signaux (4) présente une hystérésis de commutation.

15. Dispositif selon une quelconque des revendications précédentes **caractérisé en ce que** le système de mesure (22) présente un module de commande et d'exploitation au moyen duquel on peut réaliser un établissement de moyenne temporaire pour un nombre de mesures individuelles.
